# EUROPEAN PATENT SPECIFICATION

(11) **EP 1 276 286 B1**
(45) Date of publication and mention of the grant of the patent: **01.02.2006**
(21) Application number: 02254751.7
(22) Date of filing: 08.07.2002
(51) Int. Cl.: H04L 12/58

(54) **Method for providing auxiliary services relating to e-mail**
Verfahren für zusätzliche Dienste elektronischer Post
Procédé pour des services auxiliaires de courrier électronique

(30) Priority: 10.07.2001 US 901950
(43) Date of publication of application: 15.01.2003
(73) Proprietor: AT&T Corp., New York, NY 10013-2412 (US)
(72) Inventor: Kocheisen, Michael, Sam Mateo County, CA 94025 (US); Muller, Urs A., Keyport, Monmouth County, NJ 07735 (US)
(74) Representative: Suckling, Andrew Michael

(56) References cited:
- EP-A- 1 026 853
- EP-A- 1 067 772
- WO-A-01/08022

## Description

The present invention relates to the field of service activation and more particularly to a system and method for providing enhanced service activation utilising existing messaging account information.

Over the past few years, there has been an explosive increase in the use of the Internet for communication, data transfer, research and recreation. Businesses, educational institutions, individuals, and governments are beginning to use the Internet for everything from personal communications to mission-critical commercial negotiations and transactions. Electronic communications and more specifically, electronic mail, is developing into a preferred alternative to the telephone, conventional paper mail service and facsimile transmission as a means to communicate for both personal and business purposes. Typically, to gain access or open an electronic mail account, a user simply has to complete a registration or service activation form administered by the service provider. Upon completion of the form, which may require information such as the user's name, address, telephone, etc., the user will be able to access the electronic mail account.

While these electronic mail or messaging accounts are typically accessed by users from their work/home computers, additional auxiliary services have been developed to provide for alternative access to these electronic mail accounts. For example, many service providers now offer telephone access to electronic mail accounts, pager access to the accounts, etc. Typically, a separate independent registration procedure is required in order for a user to activate one or more of these alternative services. These separate registration procedures will usually require the user to provide information similar to the information the user provided to open up their original electronic mail account, as well as specific information related to the electronic mail account, such as mail server names, etc. In many instances, such information may be very difficult to come by, especially for those users who are not technically savvy and may not know where to find their mail server information. For all users, such separate registration procedures require the users to provide specifically redundant information and thus such procedures act as a deterrent or at least discourage users from activating these auxiliary services since the users may not have the time and/or the desire to provide information they had previously provided when signing up for their original electronic mail account.

Accordingly, it would be desirable to be able to have a system and method for activating new enhanced services without having to require users to provide redundant and/or not easily acquired information.

EP-A-1 026 853 describes a charging method for an information communications network. When an information provider (IP) server is accessed from a mobile station, a gateway server determines whether or not the IP server is to be billed. If the IP server is not to be billed, user billing is applied. In the case of user billing, the gateway server sends a user management number of the mobile station and the number of exchanged packets to a billing system. The billing system calculates a communication fee in accordance with the number of packets exchanged, and issues a bill to the user. If, however the IP server is to be billed, the billing system issues a bill to the IP.

WO 01/08022 discloses a method of customising the profile of a subscriber having access to a service platform. When a subscriber makes a request, a subscriber service manager issues a transaction identifier to the subscriber and stores a copy of the transaction identifier at the service platform. When the subscriber subsequently applies to customise their profile, they include the transaction identifier in their customisation message. The subscriber profile data contained in the customisation message is registered provided that the transaction identifier in the customisation message is the same as the stored transaction identifier.

The present invention provides a method of providing enhanced service activation for auxiliary services that provide access to one or more existing messaging accounts belonging to one or more account holders, the auxiliary services being provided by service providers distinct from the account providers providing the one or more existing messaging accounts, the method comprising: receiving a request for activation of the one or more auxiliary services from the one or more account holders; accessing registration information for the one or more existing messaging accounts; and providing for service activation for the one or more auxiliary services, wherein information related to the existing messaging accounts is utilised for providing for service activation for the one or more auxiliary services so that no substantial additional activation information has to be provided by the one or more account holders;
wherein the one or more auxiliary services is at least one of telephone access, facsimile access and pager access to an existing electronic mail account.

Preferred features of the invention are set out in the dependent claims.
Fig. 1 illustrates an exemplary system in accordance with the teachings of the present invention.
Fig. 2 is an exemplary screen display of the present invention.
Fig. 3 is a flow chart illustrating a method of the present invention.
Fig. 4 is a flow chart illustrating a method of the present invention.

The present invention is a system and method for providing intuitive and expedited service registration and activation for enhanced messaging services which relate to an existing messaging service account. For example, in one embodiment, an intuitive and expedited service activation is provided for telephone access to an existing electronic mail account without having the user to perform undue and burdensome information entry to become activated for the telephone access. In another embodiment, an intuitive and expedited service activation is provided for pager access to an existing electronic mail account. Other variations of both the types of existing messaging accounts and the types of enhanced messaging services are possible. In all embodiments of the present invention, the user is not required to repeat entry of redundant and/or uneasily realizable personal/account information or login credentials which may have been required during registration and activation of the user's existing messaging service account, such as the user's name, address, telephone number, mail server name, IP address, etc. As used in this application, "user", "subscriber" and "registrant" refer to the entity for which a subscriber service is provided, and "service provider" refers to the entity which normally provides a subscribed messaging service to a plurality of subscribers and includes whatever information, devices, protocols and software for implementing the access.

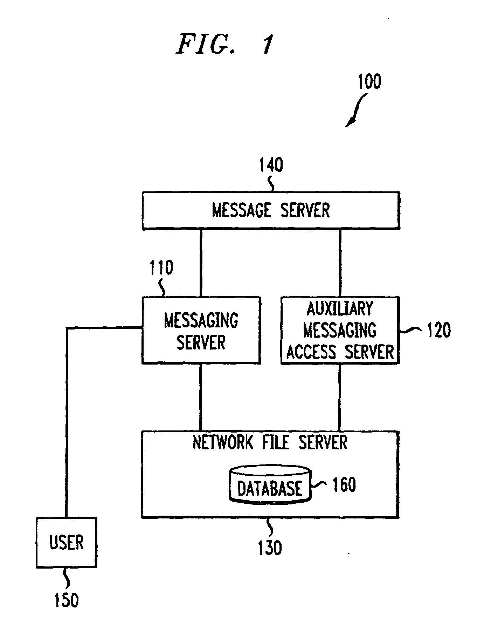

Referring to FIG. 1, an exemplary system 100 for providing enhanced or auxiliary service activation is shown. In this embodiment, a messaging server 100, such as an electronic mail server, voicemail server or other type of messaging server is provided in conjunction with an auxiliary messaging access server 120. Although only one messaging server and one auxiliary messaging access server are shown, it is contemplated that numerous servers may be in communication with one another to provide the messaging services described herein and represented as the single servers in FIG. 1. In one embodiment, messaging server 110 is operated by a first messaging service provider and auxiliary messaging access server is operated by one or more other messaging service providers distinct from the first messaging service provider. In a preferred embodiment, both messaging server 110 and auxiliary messaging access server 120 are in communication, or have the ability to access a network file server 130. Additionally, both messaging server 110 and auxiliary messaging access server 120 are in communication, or have the ability to access a message storage facility 140. Although shown separately, it is contemplated that network file server 130 and message storage facility 140 may be integrated together in other embodiments. In the present invention, messaging server 110 is accessible by a user 150, which may be, for example, an electronic mail message user or subscriber or other type of messaging user or subscriber. In one embodiment, user 150 employs browser software to access a previously established or existing messaging account, such as an electronic mail message account through messaging server 110.

Referring again to FIG. 1, network file server 130 includes a user or subscriber database 160 which stores subscriber information, such as name, address, telephone number, specific subscriber preferences, etc. Subscriber database 160 is accessible by messaging server 110 and auxiliary messaging access server 120, such that information provided by a user or subscriber during activation of the service provided by messaging server 110 is accessible by the auxiliary messaging access service provider so that the auxiliary or enhanced services may be activated for the user, as discussed in more detail later herein.

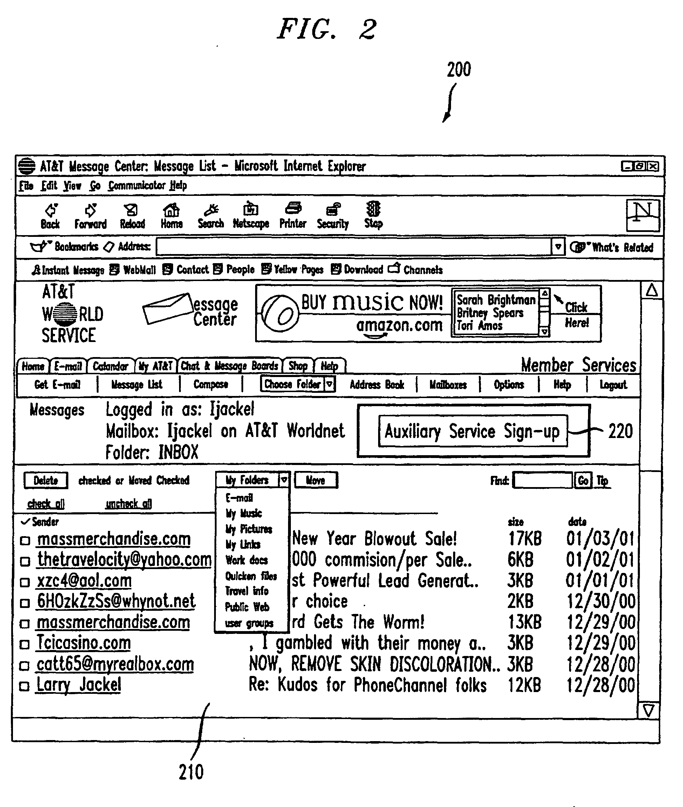

Referring to FIG. 2, one embodiment of a screen display 200 for providing enhanced service activation is shown. In this embodiment, screen display 200 include a message summary portion 210 which typically provides a summary of the user's messages, such as the message sender's addresses and message titles. Screen display 200 further includes an auxiliary service sign-up button or mechanism 220 which when activated or selected by the user, provides for enhanced service activation for the user. In one exemplary embodiment, if the existing messaging account is an electronic mail account, sign-up button 220 will provide activation for phone access to the existing electronic mail account for the user. When selected, sign-up button 220 activates an auxiliary service activation screen which may provide the user with information such as the user's access number, username, etc. and may also prompt the user to provide one or more nominal pieces of information such as an additional password, Personal Identification Number (PIN) or other information for access to the auxiliary service. In the present invention, the auxiliary service activation screen will not ask the user to provide redundant information, such as information which was provided by the user during activation of their existing messaging account, such as the electronic mail account in the above example.

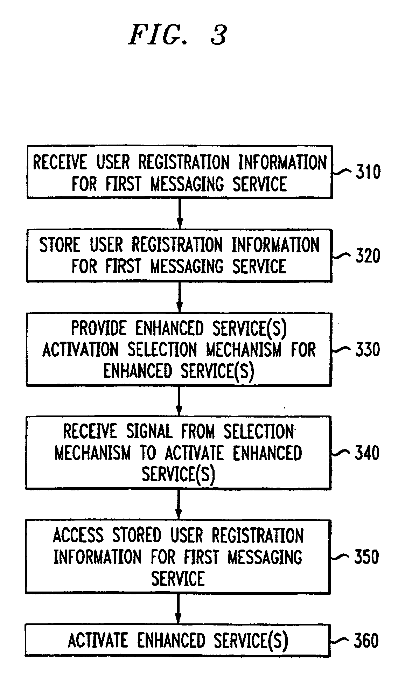

Referring to FIG. 3, an exemplary embodiment of a method for providing enhanced service activation is shown. In this embodiment, user registration information is received for a first messaging service, step 310. The first messaging service may be an electronic mail account or other messaging account which has enhanced services related to the messaging account, such as telephone access for the electronic mail account. The user registration information for the first messaging service is stored, step 320. Such registration information may be stored, for example, in network file server 130, such as shown in FIG. 1. An enhanced service(s) activation selection mechanism for an enhanced service(s) related to the first or existing messaging account is provided, step 330. Such a selection mechanism may be an activation button or link, such as shown in FIG. 2. A signal from the selection mechanism to activate enhanced service(s) is then received, step 340, such as by the user selecting or clicking the selection mechanism. The stored user registration information for the first messaging service is then accessed, step 350. Such registration information may be accessed on database 160 in network file server 130, as shown in FIG. 1. In one embodiment, the user selecting the selection mechanism provides a signal, for example, from messaging server 110 to auxiliary messaging access server 120, both shown in FIG. 1 to begin the activation process. Once the signal is received by auxiliary messaging access server 120, server 120 access the user's information on network file server 130, also shown in FIG. 1. Referring back to FIG. 3, the enhanced service(s) is then activated for the user, step 360.

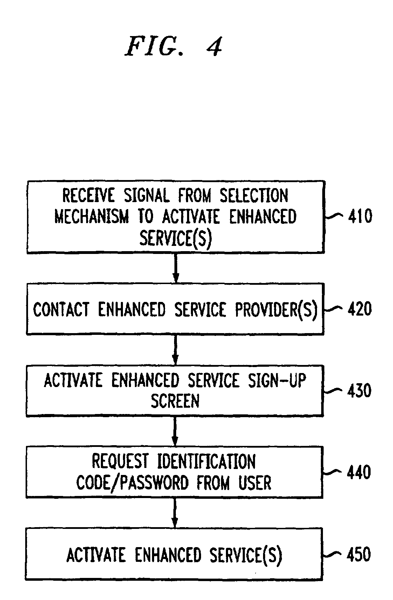

Referring to FIG 4, another embodiment of a method for providing enhanced service activation is shown. In this embodiment, a signal is received from a selection mechanism, such as an onscreen button or link to activate the enhanced service(s), step 410. The enhanced service provider(s) is contacted to begin the activation process, step 420. An enhanced service sign-up screen is activated, such as via a pop-up window on the user's computing device, step 430. An identification code/password is requested from the user to complete the activation process, step 440. The enhanced service(s) is then activated, step 450.

In the present invention, the methods described herein provide for a simplified and intuitive way to activate enhanced services related to an existing messaging account. In addition, the sign-up facility or mechanism, such as the enhanced or auxiliary service activation button also operates as an advertisement for the service. The button or link provided on the user's existing messaging account screen can include some descriptive information about the enhanced service in order to entice or encourage the user to activate the enhanced services. In the present invention, the service activation mechanism can take any number of forms, such as a button, a link, a "banner-type" link, etc. In this manner, the service activation mechanism can be aesthetically and conveniently placed in a window or screen of the user's existing messaging account so that the service activation mechanism is easily accessed by the user and also serves as a reminder to the user to activate the enhanced service(s) if the user has not already done so. Once a user has activated the enhanced service, the service activation mechanism may be removed from the user's screen or alternatively, a new different service activation mechanism may be provided for the user. For example, if the user's existing messaging account is an electronic mail account and the user has subsequently activated a phone access service to the electronic mail account, the user may then be provided with a service activation mechanism for pager access to the electronic mail account.

It will be apparent to those skilled in the art that many changes and substitutions can be made to the system and method described herein without departing from the scope of the invention as defmed by the appended claims.

## Claims

1. A method of providing enhanced service activation for auxiliary services that provide access to one or more existing messaging accounts belonging to one or more account holders (150), the auxiliary services being provided by service providers (120) distinct from the account providers (110) providing the one or more existing messaging accounts, the method comprising:
receiving a request for activation of the one or more auxiliary services from the one or more account holders (150);
accessing registration information for the one or more existing messaging accounts; and
providing for service activation for the one or more auxiliary services, wherein information related to the existing messaging accounts is utilised for providing for service activation for the one or more auxiliary services so that no substantial additional activation information has to be provided by the one or more account holders;
wherein the one or more auxiliary services is at least one of telephone access, facsimile access and pager access to an existing electronic mail account.

2. A method as claimed in claim 1, further comprising:
prompting for a user selected personal access code for the one or more auxiliary services.

3. A method as claimed in claim 1, further comprising:
providing an auxiliary services selection button (220) on an access screen (200) for the one or more existing messaging accounts.

4. A method as claimed in claim 1, wherein the electronic mail account is a Web based electronic mail account.

5. A method as claimed in claim 1, wherein the information related to the electronic mail account is stored on a network file server (130).

6. A method as claimed in claim 1, further comprising:
providing an advertisement of one or more of the auxiliary services, wherein selecting the advertisement operates as request for activation of the one or more of the auxiliary services.

## Patentansprüche

1. Verfahren zur Beschaffung einer verbesserten Dienstaktivierung für zusätzliche Dienste, die Zugang zu einem oder mehreren bestehenden Messaging-Konten ermöglichen, die einem oder mehreren Konteninhabern (150) gehören, wobei die zusätzlichen Dienste durch Dienstanbieter (120) bereitgestellt werden, die sich von den Kontenanbietern (110) unterscheiden, die das eine oder die mehreren bestehenden Messaging-Konten bereitstellen, wobei das Verfahren die folgenden Schritte umfaßt:
Empfangen einer Aufforderung zur Aktivierung des einen oder der mehreren zusätzlichen Dienste von dem einen oder den mehreren Konteninhabern (150);
Zugreifen auf Registrierungsinformationen für das eine oder die mehreren bestehenden Messaging-Konten; und
Beschaffen einer Dienstaktivierung für den einen oder die mehreren zusätzlichen Dienste, wobei Informationen bezüglich der bestehenden Messaging-Konten zur Beschaffung einer Dienstaktivierung für den einen oder die mehreren zusätzlichen Dienste genutzt werden, so daß durch den einen oder die mehreren Konteninhaber keine wesentliche zusätzliche Aktivierungsinformation bereitgestellt werden muß;
wobei der eine oder die mehreren zusätzlichen Dienste mindestens eines von folgendem ist: Telefonzugang, Faxzugang und Personenrufdienst-Zugang zu einem bestehenden Konto für elektronische Post.

2. Verfahren nach Anspruch 1, ferner mit dem Schritt:
Abfordern eines vom Benutzer gewählten persönlichen Zugangscodes für den einen oder die mehreren zusätzlichen Dienste.

3. Verfahren nach Anspruch 1, ferner mit dem Schritt:
Bereitstellen eines Zusatzdienstwählknopfes (220) auf einem Zugangsbildschirm (200) für das eine oder die mehreren bestehenden Messaging-Konten.

4. Verfahren nach Anspruch 1, wobei das Konto für elektronische Post ein Web-Konto für elektronische Post ist.

5. Verfahren nach Anspruch 1, wobei die Informationen bezüglich des Kontos für elektronische Post in einem Netzwerk-Dateiserver (130) gespeichert werden.

6. Verfahren nach Anspruch 1, ferner mit dem Schritt:
Bereitstellen einer Werbeanzeige für einen oder mehrere der zusätzlichen Dienste,
wobei das Wählen der Werbeanzeige als Aufforderung zur Aktivierung des einen oder der mehreren zusätzlichen Dienste wirkt.

## Revendications

1. Procédé de mise à disposition d'une activation de service amélioré pour des services auxiliaires qui assurent un accès à un ou plusieurs comptes de messagerie existants appartenant à un ou plusieurs détenteurs de compte (150), les services auxiliaires étant fournis par des fournisseurs de services (120) qui sont distincts des fournisseurs de comptes (110) qui fournissent les un ou plusieurs comptes de messagerie existants, le procédé comprenant:
la réception d'une requête pour l'activation des un ou plusieurs services auxiliaires en provenance des un ou plusieurs détenteurs de compte (150);
l'accès à des informations d'enregistrement pour les un ou plusieurs comptes de messagerie existants; et
la mise à disposition d'une activation de service pour les un ou plusieurs services auxiliaires, où des informations qui sont rapportées aux comptes de messagerie existants sont utilisées pour fournir une activation de service pour les un ou plusieurs services auxiliaires de telle sorte qu'aucune information d'activation additionnelle substantielle n'ait à être fournie par les un ou plusieurs détenteurs de compte,
dans lequel les un ou plusieurs services auxiliaires sont au moins un accès pris parmi un accès téléphonique, un accès de fax et un accès de dispositif de recherche de personne/messagerie sur un compte de courrier électronique existant.

2. Procédé selon la revendication 1, comprenant en outre:
la demande d'un code d'accès personnel sélectionné par l'utilisateur pour les un ou plusieurs services auxiliaires.

3. Procédé selon la revendication 1, comprenant en outre:
la fourniture d'un bouton de sélection de services auxiliaires (220) sur un écran d'accès (200) pour les un ou plusieurs comptes de messagerie existants.

4. Procédé selon la revendication 1, dans lequel le compte de courrier électronique est un compte de courrier électronique basé sur Web.

5. Procédé selon la revendication 1, dans lequel les informations rapportées au compte de courrier électronique sont stockées sur un serveur de fichiers de réseau (130).

6. Procédé selon la revendication 1, comprenant en outre:
la fourniture d'une publicité d'un ou de plusieurs des services auxiliaires où la sélection de la publicité fonctionne en tant que requête pour l'activation des un ou plusieurs des services auxiliaires.
